# EUROPÄISCHE PATENTSCHRIFT

(11) **EP 1 127 261 B1**
(45) Veröffentlichungstag und Bekanntmachung des Hinweises auf die Patenterteilung: **20.08.2003**
(21) Anmeldenummer: 99960782.3
(22) Anmeldetag: 16.10.1999
(51) Int. Cl.: G01N 1/40, G01N 1/34, B01D 61/28

(54) **MEMBRANSONDE FÜR DIE PROBENAHME EINES IN FLUIDEM MEDIUM BEFINDLICHEN ANALYTEN**
MEMBRANE PROBE FOR TAKING SAMPLES OF AN ANALYTE LOCATED IN A FLUID MEDIUM
SONDE A MEMBRANE POUR LE PRELEVEMENT D'UN ECHANTILLON D'UN ANALYTE SE TROUVANT DANS UN MILIEU FLUIDE

(30) Priorität: 22.10.1998 DE 19848542
(43) Veröffentlichungstag der Anmeldung: 29.08.2001
(73) Patentinhaber: Trace Biotech AG, 38106 Braunschweig (DE)
(72) Erfinder: KÜNNECKE, Wolfgang, D-38116 Braunschweig (DE); BEUSE, Matthias,Dr., D-30449 Hannover (DE); HANISCH, Detlef, D-38302 Wolfenbüttel (DE); PENTERIDIS, Georg, D-38114 Braunschweig (DE)
(74) Vertreter: Eisenführ, Speiser & Partner
(86) Internationale Anmeldenummer: DE9903326
(87) Internationale Veröffentlichungsnummer: WO00025107

(56) Entgegenhaltungen:
- DE-B- 2 650 730
- DE-U- 29 701 652
- GB-A- 2 208 707
- US-A- 4 891 104

## Beschreibung

Die Erfindung betrifft eine Sonde für die Probenahme eines in fluidem Medium befindlichen Analyten mit einer die Sonde nach außen abschließenden, für den Analyten durchlässigen Membran, einer hinter der Membran gebildeten Durchflusszelle und wenigstens einer Zu- und einer Ableitung, die zu dieser Durchflusszelle hin bzw. von ihr wegführt.

In der Analytik ist es häufig gewünscht, dass in einem System eine bestimmte Komponente nachgewiesen oder überwacht werden soll und dass dies über eine Messsonde geschieht. Hierfür sind entsprechend verschiedenster analytischer Möglichkeiten die unterschiedlichsten Sonden im Gebrauch. Beispielsweise sind Sonden bekannt, die Elektroden oder polarographische Messaufnehmer enthalten und nach außen - d. h. zu dem zu analysierenden Medium hin - mit einer Membran abgeschirmt sind. Solche Sonden enthalten i. a. eine stationäre Flüssigkeit, wie einen Elektrolyten oder eine Pufferlösung. Ferner gibt es Sonden für die Messung im Durchflussverfahren, d. h. dass die zu analysierende Substanz (der Analyt) nach Durchtritt durch die Membran und Eintritt in die Sonde zu einem ggf. entfernt gelegenen Messsystem transportiert und bei diesem Vorgang gemessen wird.

In der DE-AS 26 50 730 B1 und WO 97/08533 A2 ist ein Tauchdialysator beschrieben, bei dem eine Membran direkt auf ein austauschbares Sondenteil aufgebracht ist, das eine Zu- und eine Ableitung aufweist. Die Membran ist so über den Kopf des Sondenteils gespannt, dass sie abnehmbar ist. Um eine gleichmäßigere Verteilung des Puffers unter der Membran zu gewährleisten, sind in dem Kopf des Sondenteils Rillen vorgesehen. Da die Membrane häufig sehr dünn und empfindlich sind, gestaltet sich das Auswechseln und Überstülpen der Membrane über den Kopf schwierig. Zudem ist die Austauschfläche zwischen dem außerhalb der Membran befindlichen fluiden Medium und dem durch die Rillen fließenden Medium relativ groß und unbestimmt.

In der DE-OS 2 310 264 ist eine ähnliche Sonde beschrieben, bei der die Zu- und Ableitungen schraubenförmig gewandelt sind.

In der EP 0 054 537 A1 ist ein Sondenträger beschrieben, bei der die Membran direkt auf den Sondenträger aufgebracht ist. Die Anordnung ist so an dem Gehäuse angebracht, dass die Membran nicht einfach ausgewechselt werden kann. Zudem kann die Austauschfläche mit der Durchflusszelle nicht variiert werden.

In der DE 297 01 652 U1 ist eine Sonde beschrieben, bei der eine Membran auf ein Sondenteil gelegt und mit einer Membranhalterung nach außen gesichert wird. Die Membranhalterung hat eine definierte Öffnung, so dass ein fluides Medium durch die Öffnung zur Membran und von dieser zu einer Durchflusszelle gelangen kann. Die Austauschfläche zwischen Membran und Durchflusszelle ist durch eine Bohrung bestimmt, die hinter der Membran in dem Sondenteil befindlich ist. Dadurch, dass die Membran zwischen Sondenteil und Membranhalterung eingeklemmt ist, gestaltet sich das Austauschen der Membran schwierig. Zudem ist die Austauschfläche durch das fixe Sondenteil bestimmt und kann nicht geändert werden.

Eine ähnliche Sonde ist in der DE-OS 31 26 648 A1 beschrieben, bei der die Membran in die Öffnung einer auf die Sonde aufschraubbaren Membranhalterung eingebracht ist. Hierbei besteht das Problem, dass die Membranfläche nach außen durch die Bohrung in der Membranhalterung festgelegt ist, die gleichzeitig die Austauschfläche bestimmt.

In der WO 96/07885 A1 ist eine kreisförmige flache Sonde beschrieben, bei der eine Membran direkt auf eine Membranhalterung fest aufgeklebt ist, wobei zwischen der Membran und der Membranhalterung ein Verbindungskanal für eine Zu- und eine Ableitung vorgesehen ist. Die Sonde hat den Nachteil, dass die Membran nicht leicht auswechselbar und geklebt ist. Sie ist somit nicht unter den extremen Umgebungsbedingungen einsetzbar, da eine Klebeverbindung in dieser Form nicht sterildicht sein kann und sich bei Dampfsterilisierung auflösen würde. Weiterhin ist die Membran vollständig nach oben offen und bietet eine maximale Austauschfläche.

Der hier betrachtete Sondentyp ist für die Probenahme aus einem fluiden Medium geeignet, wobei der Analyt nach Eintritt in die Sonde in einen Akzeptor gelangt, der mittels Zu- und Ableitungen durch eine in der Sonde vorhandenen Durchflusszelle geführt wird.

Aufgabe der Erfindung war es daher, eine Sonde zu schaffen, bei der die Membran und die Membranhalterung einfach auswechselbar sind, bei der eine definierte Austauschfläche mit der Durchflusszelle unter Verwendung einer ansonsten gleichen Membran leicht verändert werden kann und welche eine Messung des Analyten auch außerhalb der Sonde zuläßt. Die Sonde sollte dabei unter extremen Analysebedingungen eingesetzt werden können, d. h. dampfsterilisierbar und sterildicht sein.

Die Sonde sollte so ausgestaltet werden können, dass auch kleinste Mengen an Analyt entnommen werden können und das Probevolumen, soweit dies gewünscht wird, kleingehalten werden kann.

Zur Lösung dieser Aufgabe ist vorgesehen, dass die Membran zwischen zwei Membrandichtungen gebracht ist und mit diesem eine Einheit bildet, wobei die Membrandichtungen jeweils einen Durchlass zur Membranhalterung bzw. zum Sondenteil haben und die Einheit zwischen der Membranhalterung und dem Sondenteil angeordnet und durch die Membranhalterung auswechselbar und dichtend an dem Sondenteil befestigbar ist. Die Membran- halterung bildet eine Brille und gibt mit den Durchlässen der Membrandichtungen nur eine definierte beschränkte Fläche der Membran für die Durchflusszelle frei. Eine Messung außerhalb der Sonde wird dadurch ermöglicht, daß wenigstens eine Zu- und eine separate Ableitung zu bzw. von dieser Durchflußzelle führt.

Es wird somit vorgeschlagen, dass die Membranhalterung die Austauschfläche mit der Durchflusszelle definiert. Die Membranhalterung ist dabei vor der Membran und dem Sondenteil angeordnet und klemmt die Membran dichtend und auswechselbar an dem Sondenteil fest. Die Membran ist zwischen zwei Membrandichtungen angeordnet und bildet eine sandwichstrukturartige Einheit, die leicht auswechselbar und handhabbar ist und zudem dichtende Wirkung hat. Hierdurch sind Membran und Membranhalterung als eine Einheit abnehmbar, so dass die Austauschfläche durch einfaches Abschrauben der Einheit aus Membran und Membranhalterung und Ersetzten durch eine andere wunschgemäß angepasste Einheit verändert werden kann.

Ein elementarer Unterschied zu den herkömmlichen Sonden besteht darin, dass die Membran fest zwischen den Membrandichtungen angebracht ist, so dass die häufig dünne und empfindliche Membran zusammen mit den Membrandichtungen ausgetauscht werden kann, wobei diese Einheit und die Membranhalterungen bereitgestellt werden.

Diese erfindungsgemäße Sonde ist vorzugsweise eine reine Probenahmesonde; die eigentliche Messung wird i. a. auf beliebige Weise außerhalb der Sonde vorgenommen, kann aber auch innerhalb der Durchflusszelle erfolgen. In letzterem Fall muss die Durchflusszelle zusätzlich wenigstens einen Sensor sowie Zuleitungen zu diesem Sensor für die Steuerung der Messung und die Übermittlung des Messergebnisses enthalten. Diese Maßnahmen sind als solche bekannt und werden daher hier nicht näher ausgeführt.

Die Messung kann mittels verschiedener Messverfahren erfolgen. Wird die Messung außerhalb der Sonde durchgeführt, so wird durch die Zuleitung(en) ein Akzeptorstrom in die mit der Membran nach außen abgeschlossene Durchflusszelle hineingeleitet und anschließend durch die Ableitung(en) wieder aus der Sonde heraus und der Messung zugeführt. Der Akzeptorstrom kann kontinuierlich durch die Sonde geleitet werden. Es ist möglich, den Akzeptorstrom anzuhalten, damit eine definierte Anreicherung des durch die Membran diffundierenden Analyten im Akzeptor stattfinden kann. Die Steuerung des Akzeptorstroms erfolgt jedoch ebenfalls von außerhalb der Sonde und wird daher hier nicht näher beschrieben.

Ein wesentliches Merkmal der Erfindung besteht darin, dass die Membran mit einer gesonderten Membranhalterung verbunden ist.

Die Schaffung einer Einheit aus Membran und Membranhalterung bringt mehrere Vorteile mit sich. Zunächst ermöglicht die Einheit aus Membran und Membranhalterung ein einfaches Auswechseln der Membran durch eine andere mit einer entsprechenden Halterung verbundene Membran. Auf diese Weise können verbrauchte Membranen leicht gewechselt werden und es können für unterschiedliche Messverfahren und/oder Analyten jeweils wechselweise unterschiedliche Membranen in die Sonde eingesetzt werden. Dadurch, dass die Membran mit der Halterung fest verbunden ist, ist der Austausch der häufig dünnen und empfindlichen Membran leichter handhabbar. Die Membran kann beispielsweise mit der Halterung verklebt sein, oder sie kann mit geeigneten Befestigungsmitteln an der Halterung befestigt sein.

Ein weiteres wesentliches Merkmal der Erfindung besteht darin, dass die Membranhalterung eine Brille bildet und nur eine definierte Fläche der Membran (oberhalb der Durchflusszelle) als Austauschfläche freigibt, durch die der Analyt von außen in die Durchflusszelle gelangen kann. Für die Messung und Auswertung des Analyten ist es wesentlich, dass die Austauschfläche zwischen dem den Analyten ursprünglich enthaltenden fluiden Medium und dem in der Durchflusszelle befindlichen Akzeptor genau bestimmbar ist, und dass man auf diese Austauschfläche ggf. Einfluss nehmen kann.

Die Membranhalterung ist daher so ausgebildet, dass eine definierte Fläche der über der Druchflusszelle befindlichen und diese abschließenden Membran freigegeben wird, durch die der Analyt durchtreten kann. Es ist daher möglich, für verschiedene Messungen verschiedene Einheiten aus Membran und Membranhalterung vorzuhalten, bei denen die Membranhalterung jeweils unterschiedliche Flächen der ansonsten gleichen Membran freigibt.

In Weiterbildung der Erfindung ist vorgesehen, dass die Durchflusszelle innerhalb der Sonde längs der Membran eine langgestreckte Form besitzt. Die langgestreckte Form ist eine für eine Durchflussmessung besonders günstige Geometrie, da so eine Pfropfströmung mit möglichst gleichmäßigen Akzeptorverweilzeiten erreicht werden kann. Außerdem ist es sinnvoll, den Akzeptor hinter der Membran in dünner Schichtdicke zu halten.

Die Durchflusszelle kann - in einer Ausführungsform der Erfindung - als ein in die Membran und eine ihr ggf. zugeordnete Dichtung eingelassener Kanal ausgebildet sein. Hierdurch wird optimal gewährleistet, dass der Akzeptor während des Austauschvorgangs bzw. des Durchtritts von Analyten in dünner Schicht direkt an der Membran entlang geführt wird.

Die Zu- und Ableitung(en) können vorteilhaft an den Stirnseiten der langgestreckten Durchflusszelle angeordnet sein.

In vorteilhafter Ausgestaltung der Erfindung bestehen die Zuund Ableitung(en) aus Kapillaren, zwischen denen die (vorzugsweise langgestreckte, kanalförmige) Durchflusszelle angeordnet ist.

Weiterhin ist es vorteilhaft, dass die Sonde im ganzen stabformig ist, wobei die Durchflusszelle und die Einheit aus Membran und Membranhalterung an dem einen Ende des Stabes angeordnet sind und die Zu- und Ableitungen zu Anschlüssen an dem anderen Ende des Stabes führen. In Abhängigkeit von der gewählten Länge dieses Stabes kann die Probenahme - die am unteren Ende des Stabes durch Durchtritt des Analyten in die Durchflusszelle erfolgt - an der gewünschten Stelle innnerhalb des zu untersuchenden Systems durchgeführt werden. Die Sonde kann daher sowohl kompakt als auch lang ausgeführt sein. Der Unterschied besteht hierbei im wesentlichen nur in der Länge der Zu- und Ableitungen(en) und der Länge des Sondenkörpers.

Die Einheit aus Membran und Membranhalterung kann beispielsweise mit der Sonde verschraubt sein. Andere Kupplungsmöglichkeiten sind jedoch möglich.

Im folgenden wird die Erfindung anhand eines in der Zeichnung gezeigten Ausführungsbeispiels näher erläutert, das zum besseren Verständnis der Erfindung ohne Beschränkung der Allgemeinheit dienen soll. In der Zeichnung zeigt
- Fig. 1:: ein Ausführungsbeispiel der erfindungsgemäßen Sonde im Ganzen;
- Fig. 2:: eine Membranhalterung für das in Figur 1 gezeigte Ausführungsbeispiel der Sonde in verschiedenen Schnittansichten a), b), c);
- Fig. 3:: eine Membrandichtung mit schlitzförmiger Durchtrittsöffnung für dasselbe Ausführungsbeispiel;
- Fig. 4:: den sich an die Membran anschließenden Teil der Sonde des in Figur 1 gezeigten Ausführungsbeispiels, ohne die Membran und die Membranhalterung, in verschiedenen Schnittansichten a), b), c);
- Fig. 5:: einen Sondenhut für das gezeigte Ausführungsbeispiel der Sonde mit Anschlüssen für die Zu. und Ableitung, in verschiedenen Schnittansichten a) und b);
- Fig. 6:: ein Beispiel für zwei verschiedene einsatzmöglichkeiten der erfindungsgemäßen Sonde in zwei verschiedenen Ausführungsbeispielen.

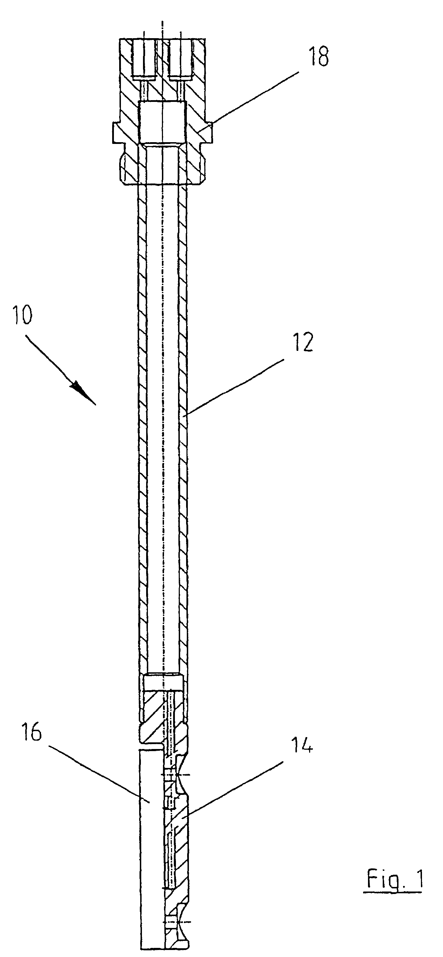

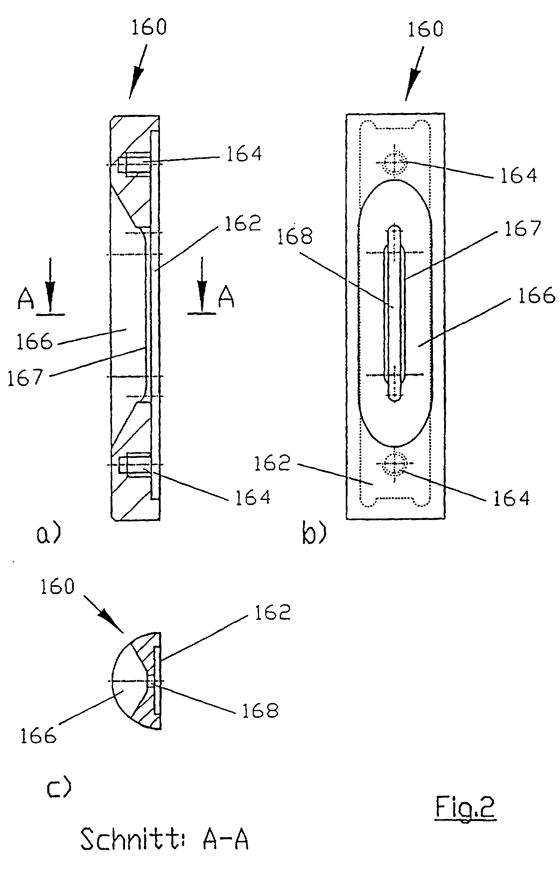

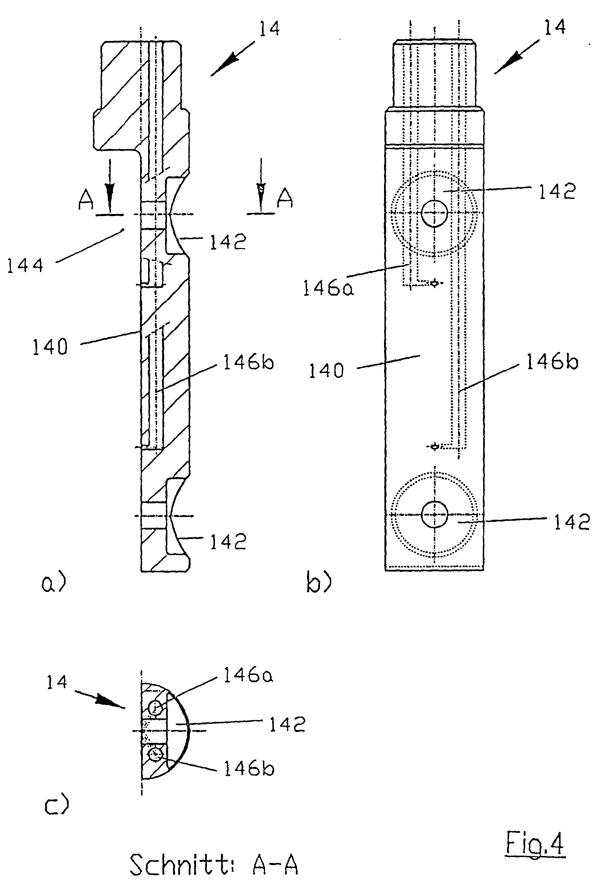

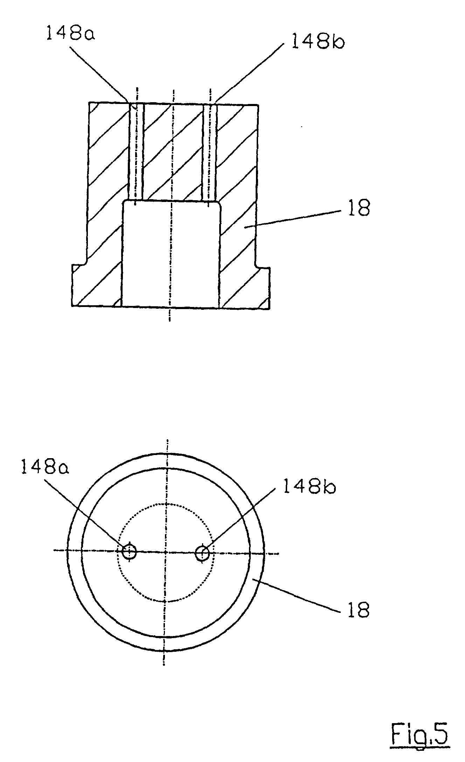

Figur 1 zeigt die im ganzen mit 10 bezeichnete Sonde in einem Längsschnitt senkrecht zu der Ebene, in der die Membran verläuft. Das gezeigte Ausführungsbeispiel der Sonde 10 besteht aus einem Tauchrohr 12, einem eine Ausnehmung für die Einheit aus Membran und Membranhalterung aufweisenden Sondenteil 14, der näher in Figur 4 gezeigt ist, der schematisch dargestellten Einheit 16 aus Membran und Membranhalterung, die näher in Figur 2 dargestellt ist, sowie dem in Figur 5 gezeigten Anschlusshut 18. Die Einzelheiten dieses Ausführungsbeispiels der Sonde werden im folgenden anhand der Figur 2 bis 5 genauer beschrieben.

Figur 2 zeigt die Membranhalterung 160 in einer quer zur nicht dargestellten Membran verlaufenden Schnittansicht a), einer Ansicht b) in Richtung des in Figur 2a) gezeigten Pfeils R und einer Querschnittsansicht c), gesehen in Richtung der Pfeile A-A aus Figur 2a). Auf der einen Seite der Membranhalterung 160, die in Einbauposition flach an das Sondenteil 14 anliegt, ist eine Vertiefung 162 eingelassen, in die die Membran und ggf. zusätzliche Dichtungen eingelegt werden können. Die Bohrungen 164 dienen zum befestigen der Membranhalterung 160 an dem in Figuren 1 und 4 dargestellten Sondenteil 14. Von der gegenüberliegenden Seite ist in die Membranhalterung 160 eine Ausnehmung 166 eingefräst, deren Bodenbereich hier mit 167 bezeichnet ist. In der Mitte der Ausnehmung 166 befindet sich - in seiner Anordnung etwa übereinstimmend mit dem Bodenbereich 167 - ein Durchlass 168. Durch die Ausnehmung 166 und den Durchlass 168 wird in der Membranhalterung 160 eine Brille gebildet, die nur eine definierte Fläche der in die Vertiefung 162 eingelegten Membran freigibt.

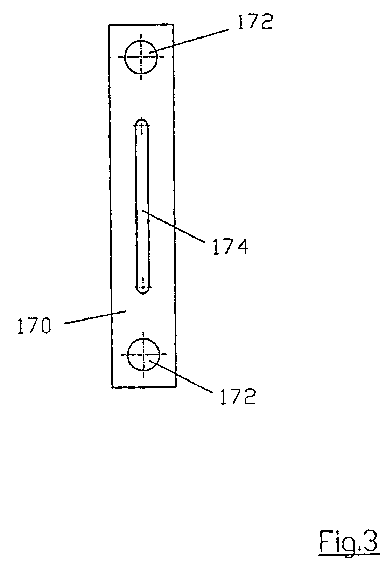

Figur 3 zeigt eine Membrandichtung 170, wie sie zur Abdichtung der Membran gegen das Sondenteil 14 einerseits und die Membranhalterung 160 andererseits in die Vertiefung 162 der Membranhalterung 160 eingelegt wird. Die Membrandichtung 170 zeigt zwei kreisrunde Durchlässe 172, durch die in Einbauposition die Schrauben zur Befestigung der Einheit 16 an dem Sondenteil 14 führen, und einen länglichen Durchlass 174, der sich mit dem Durchlass 168 in der Membranhalterung deckt. Zum Abdichten einer dünnen Membran, die z. B. aus einem Dialysefilm bestehen kann, in der Sonde ist bei dem hier dargestellten Ausführungsbeispiel vorgesehen, dass die Membran in Form eines der Fläche der Vertiefung 162 entsprechenden Rechtecks zwischen zwei der in Figur 3 gezeigten Membrandichtungen 170 gebracht und diese Sandwichstruktur dann in die Vertiefung 162 eingelegt wird. Die Dichtung 170 kann beispielsweise aus Silikon bestehen. In der Einbauposition dichten die beiden Membrandichtungen 170 die Membran gegen die Membranhalterung 160 einerseits und das Sondenteil 14 andererseits ab. Dabei bildet der Durchlass 174 in der zur Membranhalterung hin gelegenen Membrandichtung 170 zusammen dem Durchlass 168 in der Membranhalterung 160 eine Brille, die nur eine bestimmte Fläche der Membran zu dem zu untersuchenden Medium hin freigibt. Auf der anderen Seite bildet der Durchlass 174 der angrenzend an den Sondenteil 14 gelegenen Membrandichtung 170 gemeinsam mit der Membran und dem Sondenkörper eine langgestreckte Durchflusszelle, die in Zusammenschau mit Figur 4 zu erkennen ist.

Figur 4 zeigt den die Einheit 16 aus Membran und Membranhalterung aufnehmenden Sondenteil 14 in einem Längsschnitt a) senkrecht zur Membranebene, einer Draufsicht b) auf die der Membran gegenüberliegende Fläche 140 des Sondenteils 14 und eine Schnittansicht c), gesehen entlang der Pfeile A-A in Figur 4a).

Figur 4a) lässt zwei Bohrungen 142 erkennen, durch die zwei Schrauben geführt werden, mit denen die in Figur 2 gezeigte Membranhalterung 160 gemeinsam mit der Membran und zwei der in Figur 3 gezeigten Membrandichtungen als eine zusammengefasste Einheit 16 mit der Sonde 10 bzw. dem Sondenteil 14 verbunden werden. Die Einheit 16 wird dabei in die in dem Sondenteil 14 gebildete Aussparung 144 eingepasst. Die Zuund Ableitungen 146a) und 147b) führen - wie insbesondere auch aus Figur 4b) zu erkennen - in diesem Ausführungsbeispiel am Ende offen aus der der Membran gegenüberliegenden Fläche 140 heraus, da die Durchflusszelle hier in die in Figur 3 dargestellte Membrandichtung 170 eingelassen ist und durch die Membran und die Fläche 140 begrenzt durch die Dichtungsdurchiass 174 gebildet wird. Das Akzeptormedium strömt während einer Messung durch die Zuleitung 146a) oder b) in die Sonde ein, dann durch die in Figur 4b vor der Zeichnungsebene liegende Durchflusszelle und durch die Ableitung 146b oder a) wieder aus der Sonde heraus.

Die Anschlüsse für die Zu- und Ableitung 146a, 146b sind in Figur 5 gezeigt und befinden sich in dem Sondenhut 18 als Anschlussleitungen 148a und 148b Fittings zur Übernahme und Übergabe des Akzeptors, z. B. an die Messeinheit, vorgesehen.

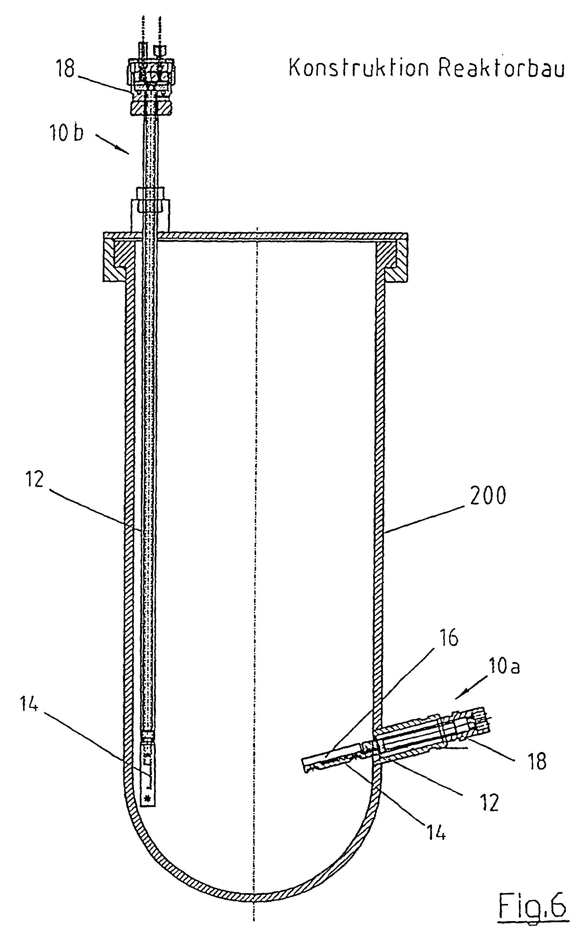

Figur 6 schließlich zeigt zwei verschiedene Ausführungsbeispiele der erfindungsgemäßen Sonde in Einbauposition in einem Reaktor 200, und zwar einmal eine kompakte Sonde 10a und zum zweiten eine Sonde 10b mit einem langen Tauchrohr 12 (gleiche Bauteile sind mit gleichen Bezugszeichen bezeichnet). Die Sonde kann den verschiedensten Einbausituationen und -erfordernissen angepasst werden.

## Patentansprüche

1. Sonde (10) für die Probenahme eines in fluidem Medium befindlichen Analyten mit
- einer die Sonde (10) nach außen abschließenden, für den Analyten durchlässigen Membran,
- einer hinter der Membran gebildeten Durchflußzelle und
- einem Sondenteil (14) mit wenigstens einer Zu- und einer separaten Ableitung zu bzw. von dieser Durchflußzelle, zum Durchleiten eines Akzeptorstroms durch die Durchflußzelle,
- einer Membranhalterung (160), die mit der Membran eine von dem Sondenteil (14) mit den Zu- und Ableitungen austauschbare Einheit bilden,
wobei
die Membran zwischen zwei Membrandichtungen (170) gebracht ist und mit diesen eine Einheit bildet, wobei die Membrandichtungen (170) jeweils einen Durchlaß (174) zur Membranhalterung (160) bzw. zum Sondenteil (14) haben, die Einheit aus Membran und Membrandichtungen (170) zwischen dem Sondenteil (14) und der Membranhalterung (160) angeordnet und durch die Membranhalterung (160) auswechselbar und dichtend an dem Sondenteil (14) befestigbar ist, und die Membranhalterung (160) eine Brille bildet und mit den Durchlässen (174) der Membrandichtungen (170) nur eine definierte beschränkte Fläche der Membran für die Durchflußzelle freigibt.

2. Sonde (10) nach Anspruch 1, **dadurch gekennzeichnet, daß** die Durchflußzelle längs der Membran eine langgestreckte Form besitzt.

3. Sonde (10) nach Anspruch 2, **dadurch gekennzeichnet, daß** die Durchflußzelle als ein in die Membran und in eine ihr gegebenenfalls zugeordnete Membrandichtung (170) eingelassener Kanal ausgebildet ist.

4. Sonde (10) nach Anspruch 2 oder 3, **dadurch gekennzeichnet, daß** die Zu- und Ableitung(en) an den Stirnseiten der langgestreckten Durchflußzelle angeordnet sind.

5. Sonde (10) nach einem der Ansprüche 1 bis 4, **dadurch gekennzeichnet, daß** sie stabförmig ist, wobei die Durchflußzelle und die Einheit aus Membran und Membranhalterung (160) an einem Ende des Stabes angeordnet sind und die Zu- und Ableitung(en) zu Anschlüssen am anderen Ende des Stabes führen.

6. Sonde (10) nach einem der Ansprüche 1 bis 5, **dadurch gekennzeichnet, daß** die Einheit aus Membran und Membranhalterung (160) mit der Sonde (10) verschraubt ist.

## Claims

1. Probe (10), for sampling an analyte present in a fluid medium, having
- a membrane, permeable to the analyte, which seals off the probe (10) from the outside,
- a throughflow cell formed behind the membrane and
- a probe portion (14) having at least one inlet duct to and one separate outlet duct from this throughflow cell, to convey an acceptor stream through the throughflow cell,
- a membrane mounting (160) which, together with the membrane, forms a unit of the probe portion (14) having the inlet and outlet ducts, which unit is replaceable,
wherein the membrane is placed between two membrane seals (170) and forms a unit therewith, and wherein the membrane seals (170) have through-openings (174) leading to the membrane mounting (160) and the probe portion (14) respectively, the unit comprising the membrane and membrane seals (170) is arranged between the probe portion (14) and the membrane mounting (16) and can be replaceably fastened to the probe portion (14) to give a seal, and the membrane mounting (160) forms an aperture-surround and, together with the through-openings (174) in the membrane seals (170) leaves only a defined, restricted area of the membrane free for the throughflow cell.

2. Probe (10) according to claim 1, **characterised in that** the throughflow cell is of an elongated shape extending longitudinally of the membrane.

3. Probe (10) according to claim 2, **characterised in that** the throughflow cell is in the form of channel let into the membrane and into a membrane seal (170) which may, if required, be associated therewith.

4. Probe (10) according to claim 2 or 3, **characterised in that** the inlet and outlet ducts are arranged at the ends of the elongated throughflow cell.

5. Probe (10) according to one of claims 1 to 4, **characterised in that** it is in the form of a rod, the throughflow cell and the unit comprising the membrane and membrane mounting (160) being arranged at one end of the rod and the inlet and outlet ducts running to connections at the other end of the rod.

6. Probe (10) according to one of claims 1 to 5, **characterised in that** the unit comprising the membrane and membrane mounting (160) is screwed to the probe (10).

## Revendications

1. Sonde (10) pour le prélèvement d'échantillons d'un analyte se trouvant dans un milieu fluide avec :
- une membrane perméable à l'analyte, obturant la sonde (10) vers l'extérieur,
- une cellule d'écoulement disposée derrière la membrane et
- un élément de sonde (14) avec au moins une conduite d'alimentation et une conduite d'évacuation séparée entrant ou sortant de cette cellule d'écoulement, pour conduire un écoulement d'accepteur à travers la cellule d'écoulement,
- une fixation de membrane (160) qui constitue, avec la membrane, une unité interchangeable de l'élément de sonde (14) avec les conduites d'alimentation et d'évacuation,
dans laquelle la membrane est disposée entre deux joints de membranes (170) et constitue, avec ceux-ci, une unité, selon laquelle les joints de membrane (170) comportent un passage (174) vers la fixation de la membrane (160) ou vers l'élément de sonde (14), l'unité constituée de la membrane et des joints de membrane (170) étant disposée entre l'élément de sonde (14) et la fixation de la membrane (160), et pouvant être retirée et fixée de manière étanche sur l'élément de sonde (14) grâce à la fixation de la membrane (160), la fixation de la membrane (160) ayant la forme d'une lunette et ne libèrant, avec les passages (174) des joints de membrane (170), qu'une surface définie et limitée de la membrane pour la cellule d'écoulement.

2. Sonde (10) selon la revendication 1, **caractérisée en ce que** la cellule d'écoulement possède une forme allongée le long de la membrane.

3. Sonde (10) selon la revendication 2, **caractérisée en ce que** la cellule d'écoulement a la forme d'un canal aménagé dans la membrane et dans un joint de membrane (170) dont elle est également munie.

4. Sonde (10) selon la revendication 2 ou 3, **caractérisée en ce que** les conduites d'alimentation et d'évacuation sont disposés sur les faces frontales de la cellule d'écoulement allongée.

5. Sonde (10) selon l'une des revendications 1 à 4, **caractérisée en ce qu'**elle a une forme de tige, moyennant quoi la cellule d'écoulement et l'unité constituée de la membrane et de la fixation de la membrane (160) sont disposées à une extrémité de la tige et les conduites d'alimentation et d'évacuation conduisent vers des raccords à l'autre extrémité de la tige.

6. Sonde (10) selon l'une des revendications 1 à 5, **caractérisée en ce que** l'unité constituée de la membrane et de la fixation de la membrane (160) est vissée sur la sonde (10).
